# EUROPEAN PATENT APPLICATION

(11) **EP 4 382 844 A1**
(43) Date of publication of application: **12.06.2024**
(21) Application number: 23383035.5
(22) Date of filing: 09.10.2023
(51) Int. Cl.: F28D 20/00, F28D 21/00

(54) **THERMAL STORAGE UNIT**

(30) Priority: 05.12.2022 ES 202232040 U
(71) Applicant: Barrio Goñi, Mariano, 31600 Burlada (ES)
(72) Inventor: Barrio Goñi, Mariano, 31600 Burlada (ES)
(74) Representative: García Limorti, Elena

(57) **Abstract**

The purpose of this invention is a thermal storage unit that uses the environment itself to store the cool night temperatures in summer as well as the maximum heat of the middle of the day in winter. It consists of a hermetically sealed and thermally insulated container (1), inside which there are several panels (2) arranged in a winding pattern to form a labyrinth which connects to the room (6) in which the temperature needs to be regulated.

## Description

### PURPOSE OF THE INVENTION

As the name states, the purpose of this invention is a thermal storage unit that makes it possible to store thermal energy sourced from the surrounding environment and used in a room when needed. This is an invention which, considering the current state of the art, offers unprecedented advantages.

### FIELD OF THE INVENTION

This invention falls within the field of temperature control elements in buildings.

### BACKGROUND OF THE INVENTION

In reference to the current state of the art, it is important to note that, although there are several types of thermal storage units in existence, there are no known types with the same or similar structural and constitutive technical characteristics as the invention described here.

### SUMMARY OF THE INVENTION

Temperature storage systems make it possible to store thermal energy for later use. This thermal energy can be stored in the form of heat or cold and can be stored using a temperature storage unit.

The storage capacity of these devices is based on their ability to efficiently store thermal energy.

The purpose of this invention is a thermal storage unit that uses the environment itself to store the cool night temperatures in summer as well as the maximum heat of the middle of the day in winter.

The thermal storage unit consists of a container which has a labyrinth-like interior through which the air flows and which incorporates several elements material that is highly capable of storing temperatures

By flowing through the labyrinth, the cold or warm air from outside transfers its temperature to these elements which, when the thermal conditions change, transfer it back to the air flowing through the labyrinth, which then transmits it to the room to cool or heat it.

### BRIEF DESCRIPTION OF DRAWINGS

To complete the description given and provide a better understanding of the characteristics of the invention, this description is supplemented with figures that are illustrative but not limited to the following:

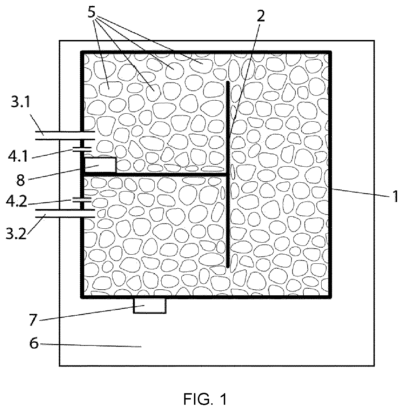

Figure 1 is a schematic representation of the thermal storage unit.

### PREFERRED EMBODIMENTS OF THE INVENTION

In view of the figures, the following is a non-limiting preferred embodiment of the proposed invention, which involves a thermal storage unit. As shown in the figures, the thermal storage unit includes a hermetically sealed and thermally insulated container (1), the interior of which contains several panels (2) arranged in a winding pattern to form a labyrinth which includes at least one external inlet (3. 1) connected to the outside environment and an interior inlet (4.1) connected to the room (6) whose temperature needs to be regulated, while there is at least one exterior outlet (3.2) connected to the outside environment and one interior outlet (4.2) connected to the room (6) at the opposite end of the labyrinth.

The interior of the container (1) contains several elements (5) arranged as barriers in the labyrinth formed by the panels (2), and these elements (5) are made of a material designed to accumulate temperature, heating up when the air flowing through the labyrinth is warm and then slowly releasing this heat, and cooling down when the air flowing through the labyrinth is cold and then slowly absorbing the ambient heat.

Control mechanisms (7) control the opening and closing of the outer inlet (3.1), the outer outlet (3.2), the inner inlet (4.1) and the inner outlet (4.2) in such a way that when the outer inlet (3.1) and the outer outlet (3.2) are open, the inner inlet (4.1) and the inner outlet (4.2) are closed and when the outer inlet (3.1) and the outer outlet (3.2) are closed, the inner inlet (4.1) and the inner outlet (4.2) are open.

Therefore, the external inlet (3.1) and the external outlet (3.2) form a circuit through which the air from the outside flows and brings the elements (5) to the temperature of the outside environment, while the internal inlet (4.1) and the internal outlet (4.2) form another circuit through which the air from the room (6) flows and is brought to the temperature of the elements (5).

## Claims

1. Thermal storage unit distinguished by the fact that it contains a hermetically sealed and thermally insulating container (1), inside which there are several panels (2) arranged in a winding shape to create a labyrinth, which at one end has at least one external inlet (3.1) connected to the outside environment and an internal inlet (4.1) connected to the room (6) in which the temperature needs to be regulated, while at the opposite end of the labyrinth there is at least one external outlet (3.2) connected to the outside environment and an internal outlet (4.2) connected to the room (6). The interior of the container (1) features several elements (5) arranged as barriers in the labyrinth created by the panels (2), with elements (5) made from a material that is highly capable of storing temperatures.

2. Thermal storage tank according to the preceding claim, distinguished by the fact that its control mechanisms (7) are designed to control the opening and closing of the outer inlet (3.1), outer outlet (3.2), inner inlet (4.1) and inner outlet (4.2) in such a way that when the outer inlet (3.1) and outer outlet (3.2) are open the inner inlet (4.1) and inner outlet (4.2) are closed and when the outer inlet (3.1) and outer outlet (3. 2) are closed the inner inlet (4.1) and the inner outlet (4.2) are open, so that the outer inlet (3.1) and the outer outlet (3.2) form a circuit through which the air from the external environment flows and by extension brings the elements (5) to the temperature of the external environment, while the inner inlet (4.1) and the inner outlet (4.2) form another circuit through which the air from the room (6) flows and is brought to the temperature of the elements (5).

3. Thermal storage unit according to any of the preceding claims, distinguished by the fact that it involves auxiliary heating devices (8) that heat or cool the air flowing through the inner labyrinth of the container (1).
